# EUROPÄISCHE PATENTSCHRIFT

(11) **EP 2 338 388 B1**
(45) Veröffentlichungstag und Bekanntmachung des Hinweises auf die Patenterteilung: **11.07.2012**
(21) Anmeldenummer: 10194435.3
(22) Anmeldetag: 10.12.2010
(51) Int. Cl.: A47J 27/04, F24C 15/16, A47J 27/12

(54) **Bodenteil, Rahmen, Deckel und Systemdampfgarer**
Base section, frame, top and system steam cooker
Elément de sol, cadre, couvercle et cuiseur à vapeur systémique

(30) Priorität: 22.12.2009 DE 102009055199
(43) Veröffentlichungstag der Anmeldung: 29.06.2011
(73) Patentinhaber: BSH Bosch und Siemens Hausgeräte GmbH, 81739 München (DE)
(72) Erfinder: Grobleben, Ralf, 75015, Bretten (DE); Schlehahn, Anne, 98587, Bermbach (DE); Schmidt, Tobias, 80636, München (DE)

(56) Entgegenhaltungen:
- WO-A2-03/069062
- US-A- 5 992 406
- US-A1- 2004 083 903

## Beschreibung

Die Erfindung betrifft ein Bodenteil für einen Systemdampfgarer, einen Rahmen zum Aufsatz auf ein Bodenteil, einen Deckel zum Aufsatz auf einen Rahmen sowie einen Systemdampfgarer mit einem Bodenteil, einem Rahmen zum Aufsatz auf das Bodenteil und einem Deckel zum Aufsatz auf den Rahmen.

Unter einem Systemdampfgarer wird insbesondere ein Dampfgarzubehör für einen Backofen verstanden, mit welchem ein herkömmlicher geschlossener Gargutträger, typischerweise ein Backblech, ausrüstbar ist und das einen Dampfgarraum bereitstellt. Der Systemdampfgarer ist folglich kein eigenständiges Dampfgargerät. WO 03069062 beschreibt einen solchen Systemdampfgarer.

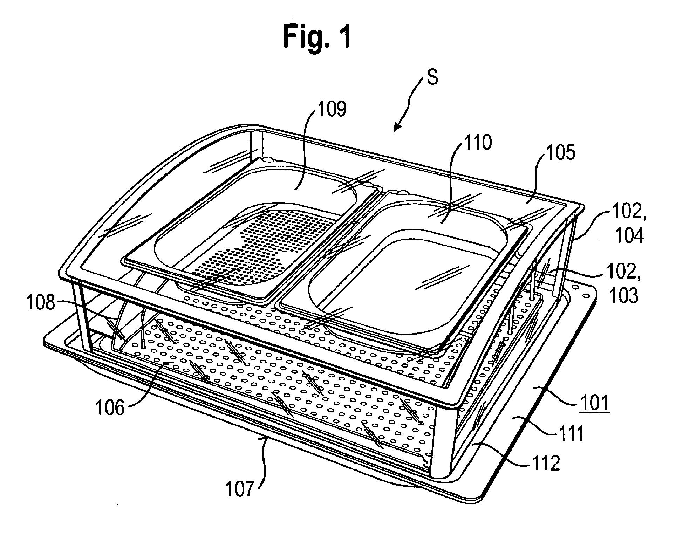

Ein bekannter Systemdampfgarer S ist in **Fig.1** gezeigt. An einem Rand 111 eines als Bodenteil dienenden herkömmlichen Backblechs 101 ist ein starrer Rahmen 102 aufgesetzt, welcher vier durchsichtige Seitenwände 103 aufweist. Genauer gesagt ist der Rahmen 102 in einem umlaufenden innenseitigen Rücksprung 112 des Rands 111 eingesetzt. Benachbarte Seitenwände 103 sind durch jeweils ein starres Verbindungselement in Form einer Aluminiumstrebe 104 miteinander verbunden. Auf den Rahmen 102 ist ein Deckel 105 aufgesetzt. Das Backblech 101, der Rahmen 102 und der Deckel 105 bilden einen für Wasserdampf im Wesentlichen dichten Hohlraum. Auf den Rücksprung112 wird innerhalb des Rahmens 102 ein gelochtes Blech 106 aufgelegt, welches einen Abstand zu einem Boden 107 des Backblechs 101 einnimmt. Das gelochte Blech 106 kann als eine untere Ablageebene für zu dämpfendes Gargut dienen. Auf das gelochte Blech 106 kann ein Traggestell 108 aufgesetzt werden, in welches Gargutbehälter, hier: Gastronorm-Behälter 109, 110, eingehängt werden können. Die Gargutbehälter 109, 110 können als eine jeweilige obere Ablageebene für Gargut dienen. Der Systemdampfgarer S ist als Ganzes in einen Ofen, insbesondere Backofen, einschiebbar und kann typischerweise über eine Aktivierung eines Unterhitzeheizkörpers von unten erwärmt werden. Für einen Betrieb wird der Boden 107 des Backblechs 101 mit Wasser bedeckt. Dieses Wasser verdampft und verteilt sich durch das gelochte Blech 106 hindurch in dem Hohlraum und dämpft so das Gargut. Nachteilig ist hier, dass ein großer Stauraum für den Systemdampfgarer S, insbesondere für den Rahmen 102 und das Traggestell 108, benötigt wird

Es ist die **Aufgabe** der vorliegenden Erfindung, die Nachteile bekannter Systemdampfgarer zu überwinden und insbesondere einen besonders kompakt verstaubaren und einfacher zu reinigenden Systemdampfgarer bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Bodenteil für einen Systemdampfgarer, wobei das Bodenteil zwei gegeneinander verschwenkbare Teilbereiche aufweist, wobei die zwei Teilbereiche entlang einer Schwenkachse zusammenlegbar sind und wobei die beiden Teilbereiche eine bezüglich der Schwenkachse im Wesentlichen gleiche Grundfläche aufweisen.

Dadurch wird vorteilhafterweise erreicht, dass die Tiefe des Systemdampfgarers im zusammengelegten Zustand in etwa halbiert wird, so dass sich das Bodenteil weit bequemer und vielseitiger verstauen oder verräumen lässt. Durch das Zusammenlegen oder Zusammenklappen wird eine Unterseite des Bodenteils im aufgeklappten Zustand im Wesentlichen zu einer Außenseite des Bodenteils im zusammengelegten oder zusammengeklappten Zustand. Dadurch ergibt sich der weitere Vorteil, dass eine Oberseite bzw. Innenseite des Bodenteils im zusammengelegten Zustand geschützt wird. Auch kann die Innenseite des Bodenteils mindestens einen Hohlraum zum Unterbringen weiterer Teile des Systemdampfgarers bilden, wodurch dieser besonders kompakt verräumt werden kann. Ferner wird eine Reinigung vereinfacht, da das Bodenteil sich besser oder sogar überhaupt erst in eine Spülwanne oder Spülmaschine einbringen lässt.

Unter einer im Wesentlichen gleichen Grundfläche der beiden Teilbereiche wird insbesondere verstanden, dass deren projizierte Grundfläche in Draufsicht oder in Sicht von unten im Wesentlichen spiegelsymmetrisch zu der Schwenkachse ist, so dass sie im zusammengelegten Zustand im Wesentlichen randbündig aneinander anliegen können. Dabei können die beiden Teilbereiche eine unterschiedliche Höhenprofilierung senkrecht zu der Grundfläche aufweisen. So kann einer der Teilbereiche eine Vertiefung aufweisen und der andere Teilbereich nicht.

Das Bodenteil ist insbesondere in einen Garraum eines Ofens einschiebbar, z.B. durch eine Auflage in einer Einschubebene des Garraums oder durch ein Einhängen in einen Backwagen. In anderen Worten kann das Bodenteil insbesondere den Grundträger des Systemdampfgarers darstellen. Das Bodenteil kann für eine Auflage insbesondere einen seitlich vorspringenden Rand aufweisen, welcher sich mindestens teilweise an den beiden Seiten des Bodenteils erstreckt, welche senkrecht zu der Schwenkachse liegen.

Zur Realisierung der Verschwenkung können die beiden Teilbereiche über mindestens ein Gelenk, z.B. ein Scharnier oder ein biegeelastisches Element, miteinander verbunden sein.

Es ist eine zur besonders kompakten Verstauung bevorzugte Ausgestaltung, dass die zwei Teilbereiche im Wesentlichen spiegelsymmetrisch zu der Schwenkachse aufgebaut sind, also auch bezüglich ihrer Höhenprofilierung. Jedoch sind kleine Unterschiede in der Ausprägung der beiden Teilbereiche erlaubt. Die Unterschiede können z.B. ein Vorsehen eines Rastmittels, z.B. Hakens, an dem einen Teilbereich und ein Vorsehen eines Rastgegenmittels, z.B. Aussparung, an dem anderen Teilbereich umfassen, uvm.

Es ist noch eine Ausgestaltung, dass in eine Oberseite mindestens einer der Teilbereiche mindestens eine Vertiefung eingebracht ist. Diese Vertiefung kann im ausgeklappten Zustand, welcher dem betriebsfertigen Zustand entspricht, zur Einbringung von Wasser verwendet werden, um den Wasserdampf für den Systemdampfgarer zu erzeugen. Im zusammengelegten Zustand kann diese Vertiefung zur Aufnahme weiterer Teile des Systemdampfgarers dienen, z.B. eines Gargutbehälters beispielsweise eines Gastronorm-Behälters uvm., eines Traggestells oder Teils davon usw.

Es ist noch eine weitere Ausgestaltung, dass jeder der Teilbereiche an seiner Oberseite einen umlaufenden, hoch stehenden Rand aufweist, welcher seitlich von der jeweiligen mindestens einen Vertiefung beabstandet ist. Der Rand ermöglicht vorteilhafterweise eine Begrenzung und Positionierung eines auf dem Bodenteil aufgesetzten Rahmens. Zudem wird im zusammengelegten Zustand ein weiterer oder erweiterter Raum zur Aufnahme zusätzlicher Teile des Systemdampfgarers ermöglicht, insbesondere solcher Teile, welche nicht in die mindestens eine Vertiefung passen, wie möglicherweise ein Rahmen und/oder ein Deckel.

Es ist ferner eine Ausgestaltung, dass die mindestens eine Vertiefung in einem Bereich ihrer oberen Kante oder oberen Rands eine Auflagefläche aufweist. Dadurch kann die Vertiefung durch einfaches Einsetzen oder Aufsetzen einer dampfdurchlässigen Abdeckung abgedeckt werden. Die Abdeckung kann im aufgeklappten oder betriebsfertigen Zustand als eine Auflageebene für Gargut dienen und im zusammengelegten Zustand als ein Raumteiler des Aufnahmeraums dienen.

Die Aufgabe wird auch gelöst durch einen Rahmen zum Aufsatz auf ein Bodenteil eines Systemdampfgarers, insbesondere wie oben beschrieben, wobei der Rahmen zusammenlegbar ist. So kann der Rahmen weit einfacher und platzsparender verstaut werden als in seinem entfalteten oder betriebsbereiten Zustand, z.B. in dem zusammengelegten Bodenteil.

Es ist eine Weiterbildung, dass der Rahmen ein vierseitiger Rahmen ist, wobei ein erstes Paar gegenüberliegender Seiten durch jeweils einen Wandabschnitt gebildet wird und ein zweites Paar gegenüberliegender Seiten durch jeweils zwei nebeneinander liegende Wandabschnitte gebildet ist, wobei benachbarte Wandabschnitte durch jeweils mindestens ein Gelenk miteinander verbunden sind. Ein solcher Rahmen lässt sich mit einer besonders geringen Höhe zusammenlegen, z.B. vierlagig. Außerdem ist der Rahmen dampfdicht ausgestaltbar. Ferner ergibt sich der Vorteil, dass der Rahmen durch eine Vielzahl von Deckeln abdeckbar ist, z.B. durch eine einfache Platte.

Der Aufbau des Gelenks ist nicht beschränkt und kann z.B. mindestens ein flexibles Gewebe oder ein Scharnier umfassen. Es wird für eine hohe Dampfdichtigkeit und preiswerte Herstellung bevorzugt, dass das mindestens eine Gelenk mindestens ein elastisches Biegeelement aufweist, z.B. aus Silikon oder einem anderen Kunststoff. Das elastische Biegeelement kann insbesondere mittels eines jeweiligen Adapters oder Verbindungsstücks an den benachbarten Wandabschnitten befestigt sein. Das Verbindungsstück kann insbesondere aus einem Profil, z.B. aus Aluminium, bestehen. Das Profil kann z.B. auf den zugehörigen Wandabschnitt klemmend aufgesteckt werden und andererseits das elastische Biegeelement halten. Die Gelenke sind zum besonders kompakten Zusammenlegen vorzugsweise um mindestens ca. 180° elastisch biegbar.

Die Aufgabe wird auch gelöst durch einen Deckel zum Aufsatz auf den Rahmen und damit zum Abdecken des Rahmens, insbesondere eines Rahmens wie oben beschrieben. Der Deckel weist zwei gegeneinander verschwenkbare Teilbereiche auf, wobei die zwei Teilbereiche insbesondere eine in Bezug auf eine zugehörige Schwenkachse im Wesentlichen symmetrische Form aufweisen können, was einen besonders kompakten zusammengelegten Aufbau ergibt. Der Deckel kann so möglicherweise auch in dem zusammengelegten Bodenteil aufgenommen werden.

Das Gelenk kann insbesondere den gleichen Aufbau aufweisen wie die Gelenke des Rahmens.

Der Deckel kann in einer Ausgestaltung auch als eigenständiges Gargeschirr verwendet werden, z.B. als eine Glasbackschale. In anderen Worten kann der Deckel dann auch als ein passendes Gargeschirr verwendet werden, welches eine Doppelfunktion ausweist. Dies kann Platz im Backofen sparen und/oder die Zahl der vorrätig zu haltenden Teile verringern.

Allgemein können der Rahmen und der Deckel aus einem gleichen oder einem verschiedenen Material hergestellt sein. Als Materialien eignen sich durchsichtige Materialien z.B. hitzebeständiger Kunststoff oder Glas als auch blickdichte Materialien z.B. Metall, insbesondere Aluminium, oder hitzebeständiger Kunststoff.

Die Aufgabe wird auch gelöst durch einen Systemdampfgarer, mindestens aufweisend ein Bodenteil, einen Rahmen zum Aufsatz auf das Bodenteil und einen Deckel zum Aufsatz auf den Rahmen, jeweils wie oben beschrieben. Mindestens der zusammengelegte Rahmen und der zusammengelegte Deckel sind in dem zusammengelegten Bodenteil verstaubar. So lässt sich zusätzlich zu den für die einzelnen Teile genannten Vorteilen eine besonders kompakte, übersichtliche und nutzerfreundliche Verstauung des Systemdampfgarers erreichen.

Es ist eine Weiterbildung, dass der Systemdampfgarer mit dem Bodenteil ausgerüstet ist, welches die Teilbereiche mit den hochstehenden Rändern aufweist, wobei die umlaufenden Ränder der beiden Teilbereiche eine kombinierte Höhe aufweisen, welche gleich oder größer ist als die kombinierte Höhe des zusammengelegten Rahmens und des zusammengelegten Deckels. So können der Rahmen und der Deckel übereinander gelegt in dem Systemdampfgarer aufgenommen oder verstaut werden.

Es ist noch eine Weiterbildung, dass der Systemdampfgarer ferner mindestens einen Gargutbehälter aufweist, wobei der Gargutbehälter in der mindestens einen Vertiefung verstaubar ist. Beispielsweise können ein oder mehrere Gargutbehälter in einer Vertiefung untergebracht werden. Auf hierdurch wird eine besonders kompakte, übersichtliche und nutzerfreundliche Verstauung des Systemdampfgarers erreicht.

Es ist auch eine Weiterbildung, dass der Systemdampfgarer mindestens ein mindestens zweiteiliges insbesondere genau zweiteiliges Traggestell zum Tragen des mindestens einen Gargutbehälters aufweist, z.B. eines Gastronorm-Behälters. Jedes der zwei Traggestellteile kann insbesondere in der mindestens einen Vertiefung verstaubar sein. Auch so wird eine besonders kompakte, übersichtliche und nutzerfreundliche Verstauung des Systemdampfgarers unterstützt.

Die zwei Traggestellteile können jeweils zumindest einseitig in den Rahmen einhängbar sein. Die Traggestellteile sind insbesondere nicht selbsttragend. Dadurch können die Traggestellteile besonders einfach ausgestaltbar und verstaubar sein. Die Traggestellteile können insbesondere jeweils aus einem einzigen Profil oder Strang hergestellt sein, z.B. aus Metall oder einem hitzebeständigen Kunststoff.

Es ist noch eine Weiterbildung, dass der Systemdampfgarer ferner mindestens eine dampfdurchlässige Abdeckung zur Abdeckung der mindestens einen Vertiefung des Bodenteils aufweist, wobei die Abdeckung z.B. als eine Gargutebene und als ein Raumteiler dienen kann.

Es ist zudem eine Weiterbildung, dass das Traggestell mindestens zwei sich eben ersteckende Traggestellteile aufweist. Diese sind besonders einfach verstaubar oder verräumbar.

Die Teile des Systemdampfgarers können insbesondere zusammensteckbar sein.

In den folgenden Figuren wird die Erfindung anhand eines Ausführungsbeispiels schematisch genauer beschrieben. Dabei können zur Übersichtlichkeit gleiche oder gleichwirkende Elemente mit gleichen Bezugszeichen versehen sein.
- Fig.2: zeigt in Schrägansicht einen erfindungsgemäßen Systemdampfgarer in einem betriebsfertigen Zustand;
- Fig.3: zeigt in Schrägansicht den erfindungsgemäßen Systemdampfgarer mit einem abgenommenen erfindungsgemäßen Deckel;
- Fig.4: zeigt in Schrägansicht den Deckel in einem zusammengelegten Zustand;
- Fig.5: zeigt in Schrägansicht den erfindungsgemäßen Systemdampfgarer ohne Deckel;
- Fig.6: zeigt in Schrägansicht den erfindungsgemäßen Systemdampfgarer mit entnommenen Gargutbehältern;
- Fig.7: zeigt in Schrägansicht den erfindungsgemäßen Systemdampfgarer mit einem entnommenen Traggestell für die Gargutbehälter;
- Fig.8: zeigt in Schrägansicht den erfindungsgemäßen Systemdampfgarer mit einem abgenommenen und teilweise zusammengelegten erfindungsgemäßen Rahmen;
- Fig.9: zeigt in Schrägansicht den Rahmen in einem zusammengelegten Zustand;
- Fig.10: skizziert in Draufsicht den erfindungsgemäßen Rahmen in einem betriebsfertigen Zustand;
- Fig.11: skizziert in Draufsicht den erfindungsgemäßen Rahmen in dem zusammengelegten Zustand;
- Fig.12: zeigt in Schrägansicht den erfindungsgemäßen Systemdampfgarer mit abgenommenen Abdeckungen;
- Fig.13: zeigt in Schrägansicht den erfindungsgemäßen Systemdampfgarer mit verstautem Gargutbehälter und Traggestellteil;
- Fig.14: zeigt in Schrägansicht den erfindungsgemäßen Systemdampfgarer mit verstautem Rahmen und Deckel; und
- Fig.15: zeigt in Schrägansicht den verstaufertigen Systemdampfgarer.

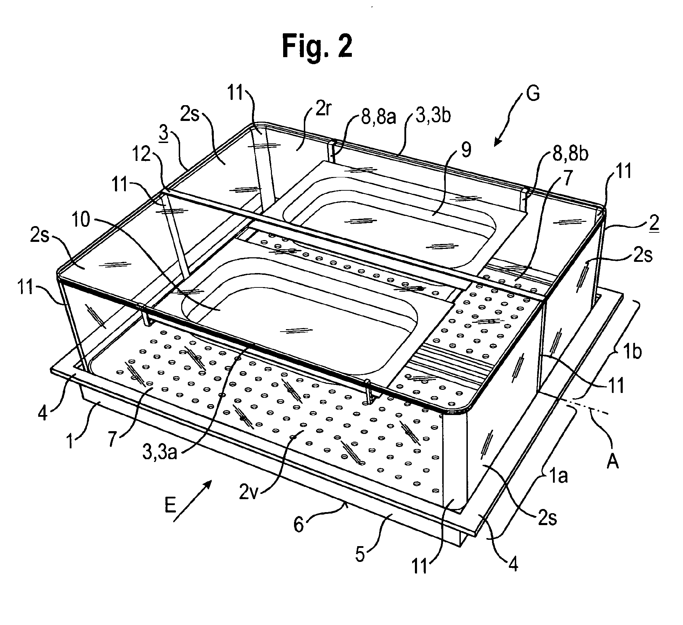

**Fig.2** zeigt in Ansicht von schräg oben einen erfindungsgemäßen Systemdampfgarer G in einem betriebsfähigen Zustand. Der Systemdampfgarer G weist ein Bodenteil 1 auf, auf dem ein umlaufender, vierseitiger Rahmen 2 aufgesetzt ist. Der Rahmen 2 wird oberseitig von einem im Wesentlichen ebenen Deckel 3 abgedeckt. Das Bodenteil 1, das Rahmenteil 2 und der Deckel 3 bilden einen im Wesentlichen dampfdichten Prozessraum für darin befindliches zu dämpfendes Gargut (o.Abb.).

Das Bodenteil 1 weist zwei gegeneinander verschwenkbare Teilbereiche 1a, 1b auf, welche um ihre Schwenkachse A herum im Wesentlichen spiegelsymmetrisch ausgebildet sind. Das Bodenteil 1 weist ferner einen umlaufenden, seitlich hervorstehenden oder hervorspringenden Rand 4 auf. Das Bodenteil 1 ist so zusammenklappbar, dass gegenüberliegende Randabschnitte der beiden Teilbereiche 1a, 1b aufeinander zum Liegen kommen.

Die senkrecht zu der Schwenkachse A angeordneten Randabschnitte, welche somit parallel zu einer Einschubrichtung E liegen, dienen als Auflagefläche für das Bodenteil 1. Dadurch kann das Bodenteil 1 beispielsweise in eine Einschubebene eines Backofens eingeschoben oder eingelegt werden. Jeder der Teilbereiche 1a, 1 b weist eine wannenförmige Vertiefung 5 auf, welche mit Wasser befüllt werden kann, um daraus bei beheiztem Ofen Wasserdampf zu erzeugen. Dazu kann beispielsweise in einem Backofen ein Unterhitzeheizkörper aktiviert sein, welcher eine Unterseite 6 des Bodenteils 1 erwärmt. Der Rand 4 ist umlaufend um das Bodenteil 1 herum ausgebildet, um eine Positionierung des Rahmens 2 auf dem Bodenteil 1 zu erleichtern. Der Rahmen 2 steht dazu nach oben vor.

Der Rahmen 2 und der Deckel 3 sind hier aus einem lichtdurchlässigen (transparenten oder opaken) hitzebeständigen Material hergestellt, z. B. aus Glas oder Kunststoff, so dass ein Benutzer des Systemdampfgarers G in den Prozessraum und damit auf das zu dämpfende Gargut sehen kann. Durch den Rahmen 2 und den Deckel 3 sind zwei gelochte Abdeckungen 7 sichtbar, welche die jeweiligen Vertiefungen 5 der beiden Teilbereiche 1a, 1b abdecken. Die Abdeckungen 7 lassen Dampf durch und dienen in dem gezeigten betriebsfertigen Zustand des Systemdampfgarers G als Gargutauflage oder Gargutebene, insbesondere für großvolumiges Gargut wie einen Blumenkohl. Ferner sind in den Rahmen 2 zwei Traggestellteile 8a, 8b eines Traggestells 8 eingehängt, welche sich im Wesentlichen nur in einer Ebene erstrecken und dazu hier als stabförmige oder profilartige Traggestellteile 8a, 8b ausgebildet sind. In die beiden Traggestellteile 8a, 8b sind (hier zwei) Gargutbehälter in Form von Gastronorm-Behältern eingehängt.

Der Rahmen 2 ist vielseitig ausgebildet, wobei ein erstes Paar gegenüberliegender Seiten (hier einer Vorderseite und einer Rückseite) durch jeweils einen Wandabschnitt 2v bzw. 2r gebildet wird. Ein zweites Paar gegenüberliegender Seiten hier der linken Seite und der rechten Seite werden durch jeweils zwei nebeneinander liegende Wandabschnitte 2s gebildet, wobei benachbarte Wandabschnitte 2v, 2r, 2s durch jeweils mindestens ein Gelenk **11** miteinander verbunden sind. Dadurch kann der Rahmen 2 zusammen gelegt werden.

Der Deckel 3 weist ebenfalls zwei Teilbereiche 3a, 3b auf, welche durch ein Gelenk 12 miteinander verbunden sind. Das Gelenk 12 erstreckt sich über die gesamte Breite des Deckels 3. Die beiden Teilbereiche 3a, 3b des Deckels 3 sind bezüglich des Gelenks 12 spiegelsymmetrisch ausgebildet. Dadurch können die beiden Teilbereiche 3a, 3b gegeneinander um 180° verschwenkt werden und dadurch randbündig aufeinander gelegt oder aufeinander geklappt werden.

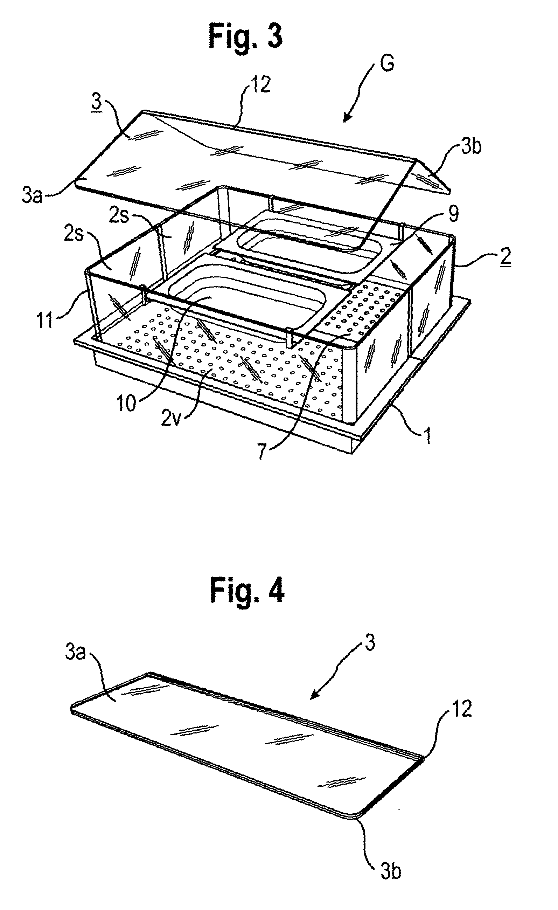

**Fig.3** zeigt in Ansicht von schräg oben einen ersten Schritt zum Verstauen oder Verräumen des Systemdampfgarers G mit abgenommenen und teilweise verschwenkten Deckel 3. Der Deckel 3 wird einfach zugeklappt, so dass sich der in **Fig.4** im zugeklappten Zustand gezeigte Deckel 3 ergibt, welcher einfacher und platzsparender verstaubar ist als der in Fig.2 gezeigte ausgeklappte Deckel 3.

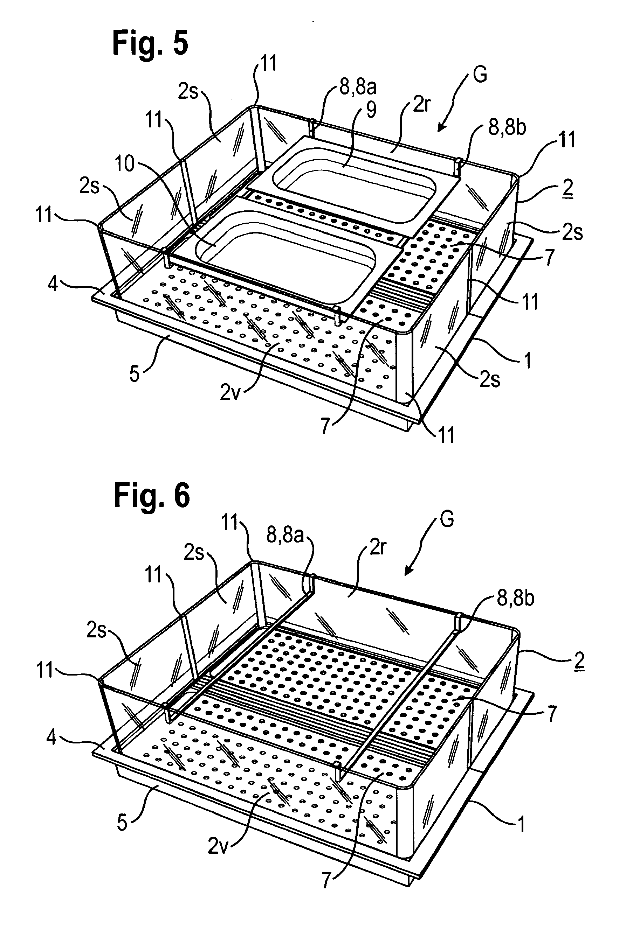

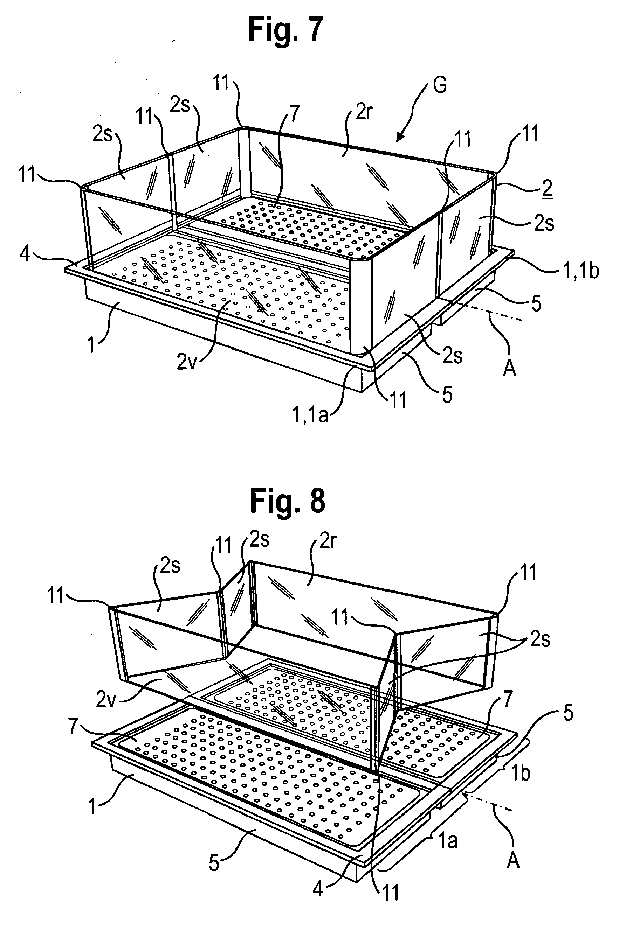

**Fig.5** zeigt den Systemdampfgarer G mit abgenommenem Deckel 3. Zum weiteren Verstauen werden die beiden Gargutbehälter 9, 10 entnommen, wie in **Fig.6** gezeigt, worauf die beiden Traggestellteile 8a, 8b, welche auf den Rahmen 2 aufgesteckt oder eingehakt sind, entnommen werden. **Fig.7** zeigt den Systemdampfgarer G bereits ohne die Traggestellteile 8a, 8b.

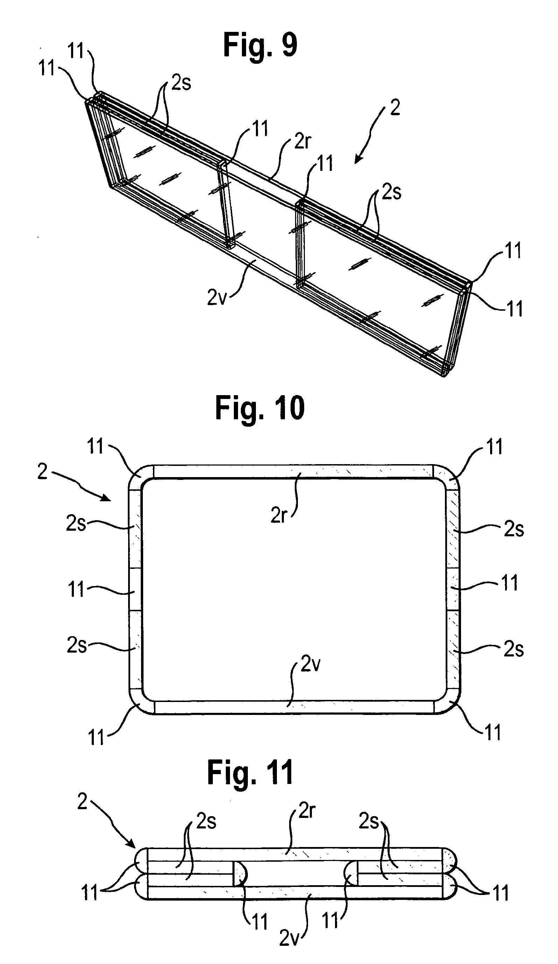

In einem nächsten Schritt wird der Rahmen 2 von dem Bodenteil 1 abgehoben und wie in **Fig.8** angedeutet, zusammengelegt. **Fig.9** zeigt den Rahmen 2 im vollständig zusammengelegten Zustand, bei dem dieser einen kompakten vierlagigen Stapel bildet. Der Aufbau und die beiden Endzustände des Rahmens 2 werden in den folgenden beiden Figuren genauer erläutert.

**Fig.10** skizziert in Draufsicht den Rahmen 2 in einem ausgeklappten oder entfalteten betriebsfertigen Zustand. Eine Vorderseite und eine Rückseite des Rahmens 2 werden durch jeweils einen Wandabschnitt 2v bzw. 2r gebildet, während eine linke Seite und eine rechte Seite des Rahmens 2 durch jeweilige Wandabschnitte 2s gebildet werden. Benachbarte Wandabschnitte 2v, 2r, 2s sind durch die Gelenke 11 miteinander verbunden, wobei jedes der Gelenke 11 um ca. 180° umgebogen werden kann. Die Gelenke 11 können beispielsweise ein elastisches Biegelement, z. B. aus Silikonmaterial aufweisen (o.Abb.). Ein jeweiliges elastisches Biegeelement ist mit einem zugehörigen Wandabschnitt 2v, 2r oder 2s über ein Verbindungsstück (o.Abb.) verbunden, z. B. ein Aluminiumprofil. Das Aluminiumprofil kann einerseits auf den Wandabschnitt 2v, 2r oder 2s aufsteckbar, insbesondere klemmend aufsteckbar, sein und andererseits das elastische Biegeelement halten. Das Profil kann beispielsweise eine H-förmige Querschnittsform aufweisen.

Zum Zusammenlegen des Rahmens 2 werden diejenigen Seiten, welche zwei Wandabschnitte 2s aufweisen, nach innen eingedrückt, wie auch in Fig.8 angedeutet, und dann durch Druck auf die Wandabschnitte 2v, 2r nach innen vollständig zusammengelegt, wie in **Fig.11** gezeigt. In dem zusammengelegten Zustand sind sämtliche Gelenke 11 um etwa 180° umgebogen, und es ergibt sich ein vierlagiger Stapel aus den Wandabschnitten 2r, 2v und 2s. Ein solcher Stapel ist besonders kompakt und gut verräumbar.

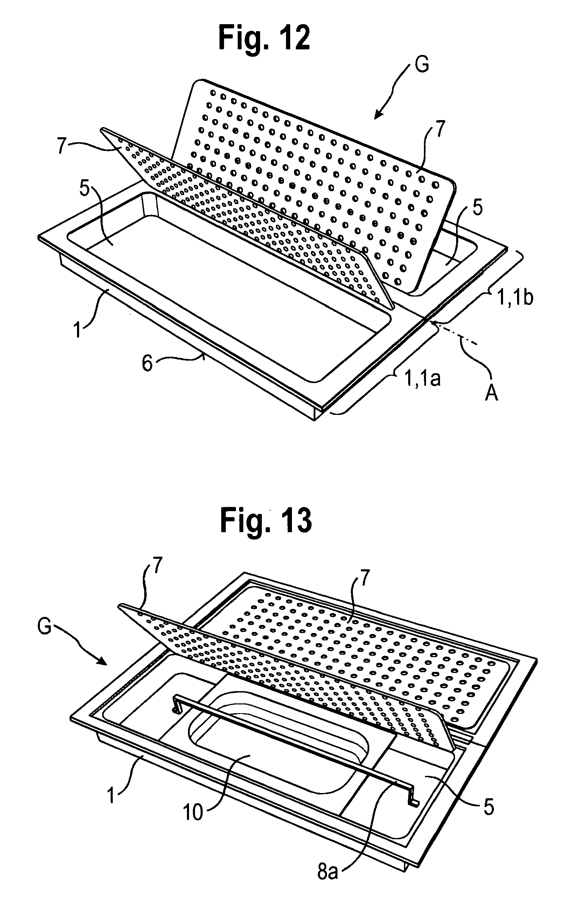

**Fig.12** zeigt einen Systemdampfgarer G, bei dem in einem weiteren Schritt die gelochten Abdeckungen 7 von den Vertiefungen 5 abgehoben worden sind. Die Abdeckungen 7 können dann beispielsweise getrocknet oder einzeln gereinigt werden. Auch das übrig bleibende Bodenteil 1 kann, z. B. in einem teilweise verschränkten Zustand, gereinigt und/oder abgetrocknet werden.

**Fig.13** zeigt einen nächsten Schritt zum Verräumen des Systemdampfgarers G, wobei nun in jede der beiden Vertiefungen 5 je einer der Gargutbehälter 10 und je eines der Traggestellteile 8a in eine jeweilige Vertiefung 5 eingesetzt ist. Die Vertiefung 5 weist somit eine größere lichte Höhe auf als eine kombinierte Höhe des Gargutbehälters 10 und des Traggestellteils 8a. Im Folgenden kann die Abdeckung 7 wieder auf die Vertiefung 5 aufgelegt werden, wie für die hintere Vertiefung gezeigt, und kann dadurch als ein Raumteiler wirken, welcher ein freies Bewegen des Gargutbehälters 10 und des Traggestellteils 8a verhindert.

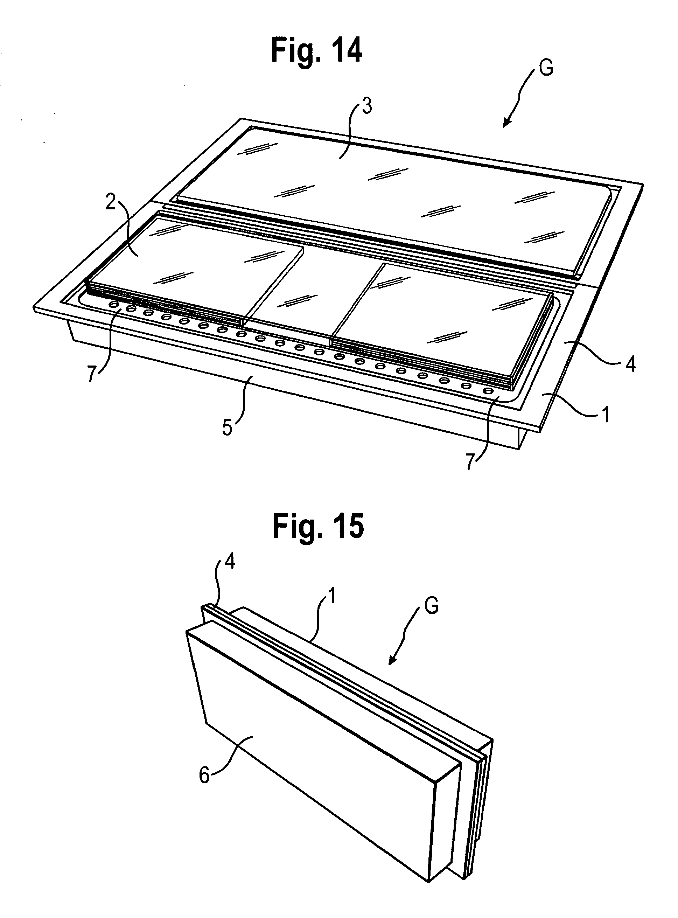

**Fig.14** zeigt den Systemdampfgarer G mit in den Vertiefungen 5 verräumten und durch die Abdeckungen 7 abgedeckten Gargutbehältern und Traggestellteilen, wobei nun auf den Abdeckungen 7 zusammengelegte Rahmen 2 und der zusammengelegte Deckel 3 abgelegt sind. Für ein Verräumen können der Rahmen 2 und der Deckel 3 auch direkt aufeinander gestapelt werden. Da der Rahmen 2 nach oben hoch steht, können bei einem folgenden Zusammenklappen des Bodenteils 1 der zusammenlegte Rahmen 2 und der zusammengelegte Deckel 3 in dem Raum oder Raumbereich aufgenommen werden, welcher sich in dem zusammengeklappten Zustand zwischen den beiden Abdeckungen 7 ergibt. Dazu ist die Höhe des Rahmens 2 mindestens halb so hoch wie die kombinierte Höhe des zusammengelegten Rahmens 2 und des zusammengelegten Deckels 3. In anderen Worten ist die sich in zusammengelegtem Zustand des Bodenteils 1 zwischen den beiden Abdeckungen 7 ergebende Raumhöhe, welche dem Doppelten einer Höhe eines Überstands des Rands 4 nach oben entspricht, größer als die kombinierte Dicke des Rahmens 2 und des Deckels 3.

In dem in **Fig.15** gezeigten vollständig zusammengelegten oder verstaufertigen Zustand des Systemdampfgarers G ist dieser besonders kompakt in einer ,,Kofferform" verräumbar. Außerdem sind sämtliche benötigten Einzelteile des Systemdampfgarers G darin enthalten, so dass ein Benutzer keine Einzelteile zusammensuchen muss.

Selbstverständlich ist die vorliegende Erfindung nicht auf das gezeigte Ausführungsbeispiel beschränkt.

### Bezugszeichenliste

- 1: Bodenteil
- 1a: Teilbereich
- 1 b: Teilbereich
- 2: Rahmen
- 2v: Wandabschnitt
- 2r: Wandabschnitt
- 2s: Wandabschnitt
- 3: Deckel
- 3a: Teilbereich
- 3b: Teilbereich
- 4: Rand
- 5: Vertiefung
- 6: Unterseite des Bodenteils
- 7: gelochte Abdeckung
- 8: Traggestell
- 8a: Traggestellteil
- 8b: Traggestellteil
- 9: Gargutbehälter
- 10: Gargutbehälter
- 11: Gelenk
- 12: Gelenk
- 101: Backblech
- 102: Rahmen
- 103: Seitenwand
- 104: Verbindungselement
- 105: Deckel
- 106: gelochtes Blech
- 107: Boden des Backblechs
- 108: Traggestell
- 109: Gargutbehälter
- 110: Gargutbehälter
- 111: Rand
- 112: Rücksprung
- S: Systemdampfgarer
- G: Systemdampfgarer
- A: Schwenkachse
- E: Einschubrichtung

## Patentansprüche

1. Bodenteil (1) für einen Systemdampfgarer (G), **dadurch gekennzeichnet, dass** das Bodenteil (1) zwei gegeneinander verschwenkbare Teilbereiche (1 a, 1 b) aufweist, wobei die zwei Teilbereiche (1a, 1b) entlang einer Schwenkachse (A) zusammenlegbar sind und wobei die beiden Teilbereiche (1a, 1 b) eine bezüglich der Schwenkachse (A) im Wesentlichen gleiche Grundfläche aufweisen.

2. Bodenteil (1) nach Anspruch 1, **dadurch gekennzeichnet, dass** die zwei Teilbereiche (1a, 1b) im Wesentlichen spiegelsymmetrisch zu der Schwenkachse (A) aufgebaut sind.

3. Bodenteil (1) nach einem der vorhergehenden Ansprüche, **dadurch gekennzeichnet, dass** in eine Oberseite mindestens eines der Teilbereiche (1a, 1 b) mindestens eine Vertiefung (5) eingebracht ist.

4. Bodenteil (1) nach Anspruch 3, **dadurch gekennzeichnet, dass** jeder der Teilbereiche (1 a, 1b) an seiner Oberseite einen umlaufenden, hoch stehenden Rand (4) aufweist, welcher seitlich von der jeweiligen mindestens einen Vertiefung (5) beabstandet ist.

5. Bodenteil (1) nach einem der vorhergehenden Ansprüche, **dadurch gekennzeichnet, dass** die mindestens eine Vertiefung (5) in einem Bereich ihres oberen Rands eine Auflagefläche aufweist.

6. Rahmen (2) zum Aufsatz auf das Bodenteil (1) nach einem der vorhergehenden Ansprüche, **dadurch gekennzeichnet, dass** der Rahmen (2) zusammenlegbar ist.

7. Rahmen (2) nach Anspruch 6, **dadurch gekennzeichnet, dass** der Rahmen (2) ein vierseitiger Rahmen ist, wobei ein erstes Paar gegenüberliegender Seiten durch jeweils einen Wandabschnitt (2v, 2r) gebildet wird und ein zweites Paar gegenüberliegender Seiten durch jeweils zwei nebeneinander liegende Wandabschnitte (2s) gebildet wird, wobei benachbarte Wandabschnitte (2v, 2r, 2s) durch jeweils mindestens ein Gelenk (11) miteinander verbunden sind.

8. Deckel (3) zum Aufsatz auf den Rahmen (2) nach einem der Ansprüche 5 oder 6, **dadurch gekennzeichnet, dass** der Deckel (3) zwei gegeneinander verschwenkbare Teilbereiche (3a, 3b) aufweist, wobei die zwei Teilbereiche (3a, 3b) eine in Bezug auf eine zugehörige Schwenkachse (A) im Wesentlichen symmetrische Form aufweisen.

9. Systemdampfgarer (G) mit einem Bodenteil (1), einem Rahmen (2) zum Aufsatz auf das Bodenteil (1) und einem Deckel (3) zum Aufsatz auf den Rahmen (2), **dadurch gekennzeichnet, dass** das Bodenteil (1) ein Bodenteil (1) nach einem der Ansprüche 1 bis 5, der Rahmen (2) ein Rahmen (2) nach einem der Ansprüche 6 oder 7 und der Deckel (3) ein Deckel (3) nach Anspruch 8 ist, wobei mindestens der zusammengelegte Rahmen (2) und der zusammengelegte Deckel (3) in dem zusammengelegten Bodenteil (1) verstaubar sind.

10. Systemdampfgarer (G) nach Anspruch 9, **dadurch gekennzeichnet, dass** der Systemdampfgarer (G) mit einem Bodenteil (1) nach einem der Ansprüche 4 oder 5 ausgerüstet ist, wobei die umlaufenden Abschnitte des Rands (4) der beiden Teilbereiche (1a, 1 b) des Bodenteils (1) eine kombinierte Höhe aufweisen, welche gleich oder größer ist als die kombinierte Höhe des zusammengelegten Rahmens (2) und des zusammengelegten Deckels (3).

11. Systemdampfgarer (G) nach einem der Ansprüche 9 oder 10, **dadurch gekennzeichnet, dass** der Systemdampfgarer (G) mit einem Bodenteil (1) nach einem der Ansprüche 4 oder 5 ausgerüstet ist und mindestens einen Gargutbehälter (9, 10) aufweist, welcher in der mindestens einen Vertiefung (5) verstaubar ist.

12. Systemdampfgarer (G) nach einem der Ansprüche 9 bis 11, **dadurch gekennzeichnet, dass** der Systemdampfgarer (G) mit einem Bodenteil (1) nach einem der Ansprüche 4 oder 5 ausgerüstet ist und ferner mindestens ein zweiteiliges Traggestell (8, 8a, 8b) zum Tragen des mindestens einen Gargutbehälters (9, 10) aufweist, wobei jedes der zwei Traggestellteile (8a, 8b) in der mindestens einen Vertiefung (5) verstaubar ist.

13. Systemdampfgarer (G) nach Anspruch 12, **dadurch gekennzeichnet, dass** das Traggestell (8) mindestens zwei sich eben ersteckende Traggestellteile (8a, 8b) aufweist.

14. Systemdampfgarer (G) nach einem der Ansprüche 10 bis 13, **dadurch gekennzeichnet, dass** der Systemdampfgarer (G) ferner mindestens eine dampfdurchlässige Abdeckung (7) zur Abdeckung der mindestens einen Vertiefung (5) des Bodenteils (1) aufweist.

## Claims

1. Base part (1) for a system steam cooker (G), **characterised in that** the base part (1) has two sub-regions (1 a, 1 b) pivotable relative to one another, wherein the two sub-regions (1 a, 1 b) are collapsible along a pivot axis (A) and wherein the two sub-regions (1 a, 1 b) have substantially the same plan area with respect to the pivot axis (A).

2. Base part (1) according to claim 1, **characterised in that** the two sub-regions (1 a, 1 b) have substantially mirror-symmetrical construction with respect to the pivot axis (A).

3. Base part (1) according to one of the preceding claims, **characterised in that** at least one recess (5) is formed in an upper side of at least one of the sub-regions (1 a, 1 b).

4. Base part (1) according to claim 3, **characterised in that** each of the sub-regions (1 a, 1 b) has at the upper side thereof an encircling upright edge (4) laterally spaced from the respective at least one recess (5).

5. Base part (1) according to any one of the preceding claims, **characterised in that** the at least one recess (5) has a support surface in a region of the upper edge thereof.

6. Frame (2) for placing of the base part (1) according to any one of the preceding claims, **characterised in that** the frame (2) is collapsible.

7. Frame (2) according to claim 6, **characterised in that** the frame (2) is a foursided frame, wherein a first pair of opposite sides is formed by one respective wall section (2v, 2r) and a second pair of opposite sides is formed by two respective mutually adjacent wall sections (2s), wherein adjacent wall sections (2v, 2r, 2s) are respectively connected together by at least one joint (11).

8. Cover (3) for placing on the frame (2) according to one of claims 5 and 6, **characterised in that** the cover (3) has two sub-regions (3a, 3b) pivotable relative to one another, wherein the two sub-regions (3a, 3b) have a substantially symmetrical shape with respect to an associated pivot axis (A).

9. System steam cooker (G) with a base part (1), a frame (2) for placing on the base part (1) and a cover (3) for placing on the frame (2), **characterised in that** the base part (1) is a base part (1) according to any one of claims 1 to 5, the frame (2) is a frame (2) according to one of claims 6 and 7 and the cover (3) is a cover (3) according to claim 8, wherein at least the collapsed frame (2) and the collapsed cover (3) are stowable in the collapsed base part (1).

10. System steam cooker (G) according to claim 9, **characterised in that** the system steam cooker (G) is equipped with a base part (1) according to one of claims 4 and 5, wherein the encircling sections of the edge (4) of the two sub-regions (1 a, 1 b) of the base part (1) have a combined height which is equal to or greater than the combined height of the collapsed frame (2) and the collapsed cover (3).

11. System steam cooker (G) according to one of claims 9 and 10, **characterised in that** the system steam cooker (G) is equipped with a base part (1) according to one of claims 4 and 5 and has at least one container (9, 10), which is stowable in the at least one recess (5), for food to be cooked.

12. System steam cooker (G) according to any one of claims 9 to 11, **characterised in that** the system steam cooker (G) is equipped with a base part (1) according to one of claims 4 and 5 and additionally has at least a two-part carrying frame (8, 8a, 8b) for carrying the at least one container (9, 10) for food to be cooked, wherein each of the two carrying frame parts (8a, 8b) is stowable in the at least one recess (5).

13. System steam cooker (G) according to claim 12, **characterised in that** the carrying frame (8) has at least two planarly extending carrying frame parts (8a, 8b).

14. System steam cooker (G) according to any one of claims 10 to 13, **characterised in that** the system steam cooker (G) additionally comprises at least one steam-permeable cover (7) for covering the at least one recess (5) of the base part (1).

## Revendications

1. Elément formant fond (1) pour un cuiseur à vapeur systémique (G), **caractérisé en ce que** l'élément formant fond (1) présente deux zones partielles (1a, 1 b) pouvant pivoter l'une contre à l'autre, les deux zones partielles (1a, 1 b) étant repliables le long d'un axe de pivotement (A) et les deux zones partielles (1 a, 1 b) présentant une surface de base essentiellement identique par rapport à l'axe de pivotement (A).

2. Elément formant fond (1) selon la revendication 1, **caractérisé en ce que** les deux zones partielles (1 a, 1 b) sont de construction essentiellement symétrique par rapport à l'axe de pivotement (A).

3. Elément formant fond (1) selon l'une des revendications précédentes, **caractérisé en ce qu'**au moins une cavité (5) est ménagée dans une face supérieure d'au moins l'une des zones partielles (1 a, 1 b).

4. Elément formant fond (1) selon la revendication 3, **caractérisé en ce que** chacune des zones partielles (1a, 1 b) présente à sa face supérieure un bord périphérique (4) surélevé, latéralement éloigné de ladite au moins une cavité (5) respective.

5. Elément formant fond (1) selon l'une des revendications précédentes, **caractérisé en ce que** ladite au moins une cavité (5) présente dans une zone de son bord supérieur une surface d'appui.

6. Cadre (2) destiné à être posé sur l'élément formant fond (1) selon l'une des revendications précédentes, **caractérisé en ce que** le cadre (2) est repliable.

7. Cadre (2) selon la revendication 6, **caractérisé en ce que** le cadre (2) est un cadre à quatre côtés, une première paire de côtés opposés étant formée par respectivement une portion de paroi (2v, 2r) et une seconde paire de côtés opposés étant formée par respectivement deux portions de paroi côte à côte (2s), les portions de paroi voisines (2v, 2r, 2s) étant reliées entre elles par au moins une articulation (11).

8. Couvercle (3) destiné à être posé sur le cadre (2) selon l'une des revendications 5 ou 6, **caractérisé en ce que** le couvercle (3) présente deux zones partielles (3a, 3b) pouvant pivoter l'une contre l'autre, les deux zones partielles (3a, 3b) ayant une forme essentiellement symétrique par rapport à un axe de pivotement (A) associé.

9. Cuiseur à vapeur systémique (G) comprenant un élément formant fond (1), un cadre (2) destiné à être posé sur l'élément formant fond (1) et un couvercle (3) destiné à être posé sur le cadre (2), **caractérisé en ce que** l'élément formant fond (1) est un élément formant fond (1) selon l'une des revendications 1 à 5, le cadre (2) est en cadre (2) selon l'une des revendications 6 ou 7 et le couvercle (3) est un couvercle (3) selon la revendication 8, au moins le cadre (2) et le couvercle (3) repliés pouvant être logés dans l'élément formant fond (1) replié.

10. Cuiseur à vapeur systémique (G) selon la revendication 9, **caractérisé en ce que** le cuiseur à vapeur systémique (G) est équipé d'un élément formant fond (1) selon l'une des revendications 4 ou 5, les portions périphériques du bord (4) des deux zones partielles (1a, 1 b) de l'élément formant fond (1) présentant une hauteur combinée égale ou supérieure à la hauteur combinée du cadre (2) et du couvercle (3) repliés.

11. Cuiseur à vapeur systémique (G) selon l'une des revendications 9 ou 10, **caractérisé en ce que** le cuiseur à vapeur systémique (G) est équipé d'un élément formant fond (1) selon l'une des revendications 4 ou 5 et comporte au moins un récipient de cuisson (9, 10) pouvant être logé dans ladite au moins une cavité (5).

12. Cuiseur à vapeur systémique (G) selon l'une des revendications 9 à 11, **caractérisé en ce que** le cuiseur à vapeur systémique (G) est équipé d'un élément formant fond (1) selon l'une des revendications 4 ou 5 et comporte en outre au moins un châssis porteur en deux parties (8, 8a, 8b) destiné à porter ledit au moins un récipient de cuisson (9, 10), chacune des deux parties (8a, 8b) pouvant être logées dans ladite au moins une cavité (5).

13. Cuiseur à vapeur systémique (G) selon la revendication 12, **caractérisé en ce que** le châssis porteur (8) comporte au moins deux parties (8a, 8b) s'étendant à plat.

14. Cuiseur à vapeur systémique (G) selon l'une des revendications 10 à 13, **caractérisé en ce que** le cuiseur à vapeur systémique (G) comporte en outre au moins un recouvrement (7) laissant passer la vapeur, destiné à recouvrir ladite au moins une cavité (5) de l'élément formant fond (1).
